# EUROPÄISCHE PATENTSCHRIFT

(11) **EP 4 078 100 B1**
(45) Veröffentlichungstag und Bekanntmachung des Hinweises auf die Patenterteilung: **01.11.2023**
(21) Anmeldenummer: 20817286.6
(22) Anmeldetag: 01.12.2020
(51) Int. Cl.: G01F 1/60

(54) **VERFAHREN ZUM BETREIBEN EINES MAGNETISCH-INDUKTIVEN DURCHFLUSSMESSGERÄTES**
METHOD OF OPERATING A MAGNETIC INDUCTIVE FLOWMETER
PROCÉDÉ DE FONCTIONNEMENT D'UN DÉBITMÈTRE MAGNÉTIQUE INDUCTIF

(30) Priorität: 19.12.2019 DE 102019135278
(43) Veröffentlichungstag der Anmeldung: 26.10.2022
(73) Patentinhaber: Endress + Hauser Flowtec AG, 4153 Reinach (CH)
(72) Erfinder: SCHMALZRIED, Frank, 85406 Zolling (DE); RUFER, Heinz, 4143 Dornach (CH); DRAHM, Wolfgang, 85354 Freising (DE); KÜNG, Thomas, 4142 Münchenstein (CH)
(74) Vertreter: Penner, Paul
(86) Internationale Anmeldenummer: PCT/EP2020/084082
(87) Internationale Veröffentlichungsnummer: WO 2021/121960

(56) Entgegenhaltungen:
- EP-A1- 2 789 985
- DE-A1-102009 002 539
- US-A- 2 893 243
- US-A- 3 840 728
- US-A1- 2012 029 845

## Beschreibung

Die Erfindung betrifft ein Verfahren zum Betreiben eines magnetisch-induktiven Durchflussmessgerätes und ein magnetisch-induktives Durchflussmessgerät.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U der Durchfluss *Q_{V},* bzw. die Durchflussgeschwindigkeit u und, mit Hinzunahme eines bekannten Rohrquerschnitts, der Volumendurchfluss *^{V̇}* ermittelt werden.

Magnetisch-induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Die DE 10 2009 002 539 A1 offenbart die Messung der Mediumsleitfähigkeit mittels Anwendung von Impedanzspektroskopie auf Eigangsimpedanz der Messelektroden. Damit lässt sich Belagsbildung auf den Messelektroden detektieren. Nachteilig daran ist, dass Einflüsse durch externe Magnetfelder mit dem Verfahren nicht detektierbar sind.

Der Erfindung liegt die Aufgabe zugrunde, ein Verfahren zum Betreiben eines magnetisch-induktiven Durchflussmessgerätes bereitzustellen, mit dem Einflüsse externer Magnetfelder auf die Durchflussmessung von thermischen Einflüssen getrennt bestimmt werden können.

Die Aufgabe wird gelöst durch das Verfahren nach Anspruch 1 und dem magnetisch-induktiven Durchflussmessgerät nach Anspruch 10.

Das erfindungsgemäße Verfahren zum Betreiben eines magnetisch-induktiven Durchflussmessgerätes, wobei das magnetisch-induktive Durchflussmessgerät umfasst:
- ein Messrohr zum Führen eines fließfähigen Mediums;
- mindestens zwei Messelektroden zum Erfassen einer strömungsgeschwindigkeitsabhängigen, in dem Medium induzierten Messspannung; und
- eine magnetfelderzeugende Vorrichtung zur Erzeugung eines das Messrohr durchsetzenden Magnetfeldes,

wobei die magnetfelderzeugende Vorrichtung ein Spulensystem mit mindestens einer Spule aufweist;
wobei eine Abweichung *σ* eines Blindwiderstandes des Spulensystems oder einer vom Blindwiderstand des Spulensystems abhängigen Größe von einem Sollwert bestimmt wird,
wobei ein Messsignal an dem Spulensystem ermittelt wird,
wobei mittels einer Transformation, insbesondere einer Integraltransformation und/oder einer Fourier-Analyse eines zeitlichen Ausschnittes des Anregungssignales und des Messignales oder eines zeitlichen Ausschnittes einer von dem Anregungssignal und/oder Messsignal abhängigen Größe eine Bestimmung der vom Blindwiderstand des Spulensystems abhängigen Größe zumindest für eine Überwachungsfrequenz *f*_{Ü} erfolgt.

Der Blindwiderstand ist eine frequenzabhängige Größe, die einen Wechselstrom durch Aufbau einer Wechselspannung begrenzt und eine zeitliche Phasenverschiebung zwischen Spannung und Strom verursacht. Der Blindwiderstand ist in der komplexen Wechselstromrechnung der Imaginärteil der komplexen Impedanz. Der Realteil der Impedanz wird als Wirkwiderstand bezeichnet. Der Betrag der Impedanz wird als Scheinwiderstand bezeichnet.

Externe Magnetfelder beeinflussen das Spulensystem des magnetisch-induktiven Durchflussmessgerätes und verursachen Messfehler bei der ermittelten Durchflussmessgröße. Erfindungsgemäß wird für die Ermittlung des Einflusses durch externe Magnetfelder die Abweichung des Blindwiderstandes der Spule bzw. des Spulensystems von einem vorgegebenen Sollwert bestimmt. Der Wirkwiderstand weist einen Frequenzbereich auf, in dem er im Wesentlichen unempfindlich gegenüber externer Magnetfelder ist. Im gleichen Frequenzbereich führen bei dem Blindwiderstand bereits geringste Einflüsse durch externe Magnetfelder zu Abweichungen von mehreren Prozent. Temperaturabhängige Messungen konnten zeigen, dass thermische Einflüsse im selben Frequenzbereich im Wesentlichen ausschließlich auf den Wirkwiderstand Auswirkungen haben.

Gemäß dem Fall, dass es sich bei dem Anregungssignal um eine Spulenspannung handelt, entspricht das Messsignal einen Spulenstrom. Gemäß dem Fall, dass es sich bei dem Anregungssignal um einen Spulenstrom handelt, entspricht das Messsignal eine Spulenspannung.

Es ist vorteilhaft für die Ermittlung des Blindwiderstandes einen zeitlichen Ausschnitt des Anregungssignales und des Messsignales oder einer von dem Anregungssignal und/oder Messignal abhängigen Größe vom Zeitbereich in den Frequenzbereich zu transformieren, um somit das zum Messsignal und/oder Anregungssignal bzw. zur vom Anregungssignal und/oder Messignal abhängigen Größe gehörige Frequenzspektrum zu erhalten. Weiterhin werden für die Ermittlung der Abweichung σ Änderungen des Blindwiderstandes im Frequenzspektrum bestimmt. Dabei kann der Blindwiderstand über das gesamte Spektrum in die Bestimmung der Abweichung σ eingehen oder nur ausgewählte Frequenzen des Blindwiderstandes, welche im Folgenden als Überwachungsfrequenz *f*_{Ü} bezeichnet werden.

Für die Ermittlung des Frequenzspektrums des Blindwiderstandes wird entweder das Anregungssignal und das Messsignal erst in ein Frequenzspektrum transformiert und dann der Blindwiderstand aus dem Quotienten beider Signale ermittelt, oder ein Zeitsignal des Blindwiderstandes wird zuerst aus dem Anregungssignal und dem Messsignal gebildet und dann in ein Frequenzspektrum transformiert.

Als Methode zum Transformieren eignen sich beispielsweise eine Integraltransformation und eine Fourier-Analyse, wobei die Fourier-Analyse die Methode der Fourier-Reihen, der kontinuierlichen Fourier-Transformation, der diskreten Fourier-Transformation und der Fouriertransformation für zeitdiskrete Signale umfasst.

Eine Ausgestaltung sieht vor, dass ein korrigierter Durchflussmesswert *Q_{V}* mittels einer Polynomfunktion, insbesondere einer Linearen Funktion in Abhängigkeit der Abweichung σ und der aktuell erfassten Messspannung oder einer von der erfassten Messspannung abhängigen Größe ermittelt wird,
wobei die Polynomfunktion optional einen Korrekturfaktor *k* aufweist.

Die Abweichung der ermittelten Durchflussmessgröße bei Störungen durch externe Magnetfelder von einem Referenzmesswert ohne externe Störungen korreliert mit der Abweichung σ des Blindwiderstandes von einem Sollwert. Eine Korrektur lässt sich mittels einer Polynomfunktion in Abhängigkeit der Abweichung *σ* realisieren. Es ist sich weiterhin herausgestellt, dass eine Lineare Funktion in Abhängigkeit von der Abweichung *σ* und der aktuellen an den Messelektroden erfassten Messspannung bzw. der von der erfassten Messspannung abhängigen Durchflussmessgröße ausreichend ist und somit die Störeinflüsse auf die Durchflussmessung kompensierbar sind.

Es gibt jedoch auch Anwendungen in denen eine Korrektur mittels ausschließlich der Abweichung *σ* und der aktuellen erfassten Messspannung bzw. der von der erfassten Messspannung abhängigen Größe nicht ausreichend ist. In den Fällen kann durch die zusätzliche Verwendung eines Korrekturfaktors der Fehler der Durchflussmessung weiter reduziert werden. Es hat sich herausgestellt, dass eine derartige Korrektur besonders vorteilhaft für batteriebetriebene magnetisch-induktive Durchflussmessgeräte ist, dessen Spulensystem üblicherweise mit einer geringeren Stromstärke betrieben wird als bei netzbetriebenen magnetisch-induktiven Durchflussmessgeräten.

Gemäß einer weiteren Ausgestaltung gilt für den Korrekturfaktor *k,* dass 0,75 ≤ *k* ≤ 1,25, insbesondere 0,95 ≤ *k* ≤ 1,05 und bevorzugt 0,995 ≤ *k* ≤ 1,005 gilt.

Eine Ausgestaltung sieht vor, dass ein Anregungssignal am Spulensystem bereitgestellt wird,
wobei das Anregungssignal eine Pulsfolge mit einer Frequenz, mindestens zwei Pulsfolgen mit jeweils mindestens einer Frequenz und/oder mindestens ein sinusförmiges Signal umfasst.

Das Anregungssignal dient zum Betreiben des Spulensystems und zum Erzeugen eines das Messrohr durchdringenden Magnetfeldes mit zeitlich konstanter magnetischen Feldstärke. Das Anregungssignal kann ein kontrolliert aufgebrachter, zeitlich veränderlicher Spulenstrom oder eine zeitlich veränderliche Spulenspannung sein.

Die Pulsfolgen werden bevorzugt in zwei aufeinanderfolgenden Messphasen an das Spulensystem angelegt. Es versteht sich von selbst, dass die Messphasen, in denen die Pulsfolgen jeweils angelegt werden, weder direkt aufeinander folgen müssen, noch dass die Pulsfolgen mit der Umschaltung des Magnetfeldes synchronisiert sein müssen. Vielmehr können die Pulsfolgen sowohl synchron als auch asynchron zum Abgreifen der induzierten Messspannung mittels der Messelektroden angelegt werden. Bei der Pulsfolge handelt es sich beispielsweise um eine Folge aus rechteckförmigen Pulsen. Es können jedoch auch andere Arten von Pulsfolgen, z. B. sinusförmige Pulse oder Pseudo-Rauschen in Verbindung mit der vorliegenden Erfindung verwendet werden.

Eine Ausgestaltung sieht vor, dass die Transformation eine Integraltransformation und/oder eine Fourier-Analyse ist.

Eine Ausgestaltung sieht vor, dass für die Überwachungsfrequenz *f*_{Ü} gilt, dass 0,1 *Hz* ≤ *f*_{Ü} ≤ 10 *kHz,* insbesondere 1 ≤ *f*_{Ü} ≤ 1.000 *Hz* und bevorzugt *f*_{Ü} ≤ 250 *Hz* ist. Es hat sich überraschenderweise herausgestellt, dass eine Spektrallinie einer Überwachungsfrequenz *f*_{Ü} mit niedrigen Frequenzwerten (*f*_{Ü} ≤ 10 *kHz,* insbesondere ≤ 1 *kHz* und bevorzugt ≤ 250 *Hz*) ausreichend Leistung enthält, um für die Bestimmung von Abweichungen *σ*, welche durch externe Magnetfelder bedingt sind, benutzt zu werden.

Eine Ausgestaltung sieht vor, dass der Sollwert des Blindwiderstandes oder der vom Blindwiderstand des Spulensystems abhängigen Größe, den Blindwiderstand oder die vom Blindwiderstand des Spulensystems abhängige Größe im justierten Zustand beschreibt.

Der Sollwert des Blindwiderstandes wird bei der Justierung des magnetisch-induktiven Durchflussmessgerätes bestimmt. Dies erfolgt in einer kontrollierten und bekannten Umgebung. Alternativ kann der Sollwert auch über ein Simulationsverfahren bestimmt werden.

Der Sollwert des Blindwiderstandes wird in einer Auswerteschaltung des magnetisch-induktiven Durchflussmessgerätes hinterlegt. Abweichungen *σ* des aktuell bestimmten Blindwiderstandes werden mit dem Sollwert über die Auswerteschaltung verglichen.

Eine Ausgestaltung sieht vor, dass die vom Blindwiderstand des Spulensystems abhängige Größe den Scheinwiderstand des Spulensystems umfasst.

Eine Ausgestaltung sieht vor, dass das Anregungssignal einem Spulenerregersignal entspricht,
wobei das Spulenerregersignal zumindest eine Messphase aufweist, in der ein Spulenstrom im Wesentlichen konstant ist und in der eine Messung der induzierten Messspannung erfolgt,
wobei das Spulenerregersignal zwischen zwei insbesondere aufeinanderfolgende Messphasen eine Einschwingphase aufweist, in welcher sich ein Spulenstrom und/oder eine Spulenstromrichtung im Spulensystem ändert.

Das Spulenerregersignal entspricht den Signalen, welche bei herkömmlichen magnetisch-induktiven Durchflussmessgeräten an das Spulensystem angelegt werden zur Erzeugung eines konstanten Magnetfeldes während der Messphase. In der Messphase wird an den Messelektroden die im Medium induzierte Messspannung ermittelt. Die Funktion des Spulenerregersignales ist es, ein zeitlich konstantes Magnetfeld während einer Messphase zu erzeugen.

Ein Spulenerregersignal weist üblicherweise eine im Wesentlichen pulsförmige Spulenspannung oder einen pulsförmigen Spulenstrom mit getaktetem Vorzeichen auf. Dabei existiert immer ein Bereich, in welchem der Spulenstrom und/oder die Spulenspannung konstant ist. Es gibt auch Ausgestaltungen, in denen das Spulenerregersignal zwei oder mehr pulsförmige Spulenspannungen umfasst, wobei eine dazu dient, eine Abklingdauer des Spulenstromes zu reduzieren und somit die Erzeugung des zeitlich konstanten Magnetfeldes zu beschleunigen.

Eine Ausgestaltung sieht vor, dass das Anregungssignal einem Spulenerregersignal und einem zusätzlich aufgegeprägtes Diagnosesignal entspricht,
wobei das Spulenerregersignal zumindest eine Messphase aufweist, in der ein Spulenstrom im Wesentlichen konstant ist und in der eine Messung der induzierten Messspannung erfolgt,
wobei das Spulenerregersignal und das Diagnosesignal jeweils eine Pulsfolge mit einer Frequenz, mindestens zwei Pulsfolgen mit jeweils mindestens einer Frequenz und/oder mindestens ein sinusförmiges Signal umfasst,
wobei die mindestens eine Frequenz des Diagnosesignales von der mindestens einen Frequenz des Diagnosesignales und/oder eine Amplitude des Diagnosesignales von einer Amplitude des Spulenerregersignales abweicht.

Es ist weiterhin vorteilhaft, wenn das Anregungssignal nicht ausschließlich aus dem Spulenerregersignal besteht, sondern zusätzlich noch ein Diagnosesignal aufweist. Das Diagnosesignal umfasst eine Pulsfolge mit einer Frequenz, mindestens zwei Pulsfolgen mit jeweils mindestens einer Frequenz und/oder mindestens ein sinusförmiges Signal. Darunter fällt auch ein sogenanntes Pseudo-Rauschen mit einer Vielzahl von Frequenzen, also ein Frequenzspektrum.

Das Anregungssignal kann eine Phase zwischen den Spulenerregersignalen aufweisen, in der das Diagnosesignal auf das Spulensystem aufgebracht wird. Dafür kann die Periodendauer zwischen den pulsförmigen Spulenspannungen erhöht oder das Spulenerregersignal kurzzeitig ausgesetzt werden.

Gemäß einer alternativen Ausgestaltung kann das Diagnosesignal auch auf das Spulenerregersignal aufgebracht werden, vorzugsweise jedoch abseits der Messphase.

Die Frequenz und/oder die Amplitude des Diagnosesignales unterscheiden sich vorzugsweise. Dadurch lässt sich die Empfindlichkeit bei der Bestimmung der Abweichung *σ* unabhängig vom Spulenerregersignal einstellen.

Ein erfindungsgemäßes magnetisch-induktives Durchflussmessgerät, umfasst:
- ein Messrohr zum Führen eines fließfähigen Mediums;
- mindestens zwei Messelektroden zum Erfassen einer strömungsgeschwindigkeitsabhängigen, in dem Medium induzierten Messspannung; und
- eine magnetfelderzeugende Vorrichtung zur Erzeugung eines das Messrohr durchsetzenden Magnetfeldes umfasst,
wobei die magnetfelderzeugende Vorrichtung ein Spulensystem mit mindestens einer Spule aufweist;
und ist dadurch gekennzeichnet, dass eine Betriebs-, Mess- und/oder Auswerteschaltung dazu eingerichtet ist, das erfindungsgemäße Verfahren auszuführen.

Die Erfindung wird anhand der nachfolgenden Figuren näher erläutert. Es zeigt:
Fig. 1: eine Perspektivansicht auf ein erfindungsgemäßes magnetisch-induktives Durchflussmessgerät;
Fig. 2: eine Ausgestaltung eines Anregungssignales B und eines Messsignales A im Zeitbereich und im dazugehörigen Frequenzbereich;
Fig. 3: zwei weitere Ausgestaltungen des Anregungssignales B und Messsignales A im Zeitbereich.

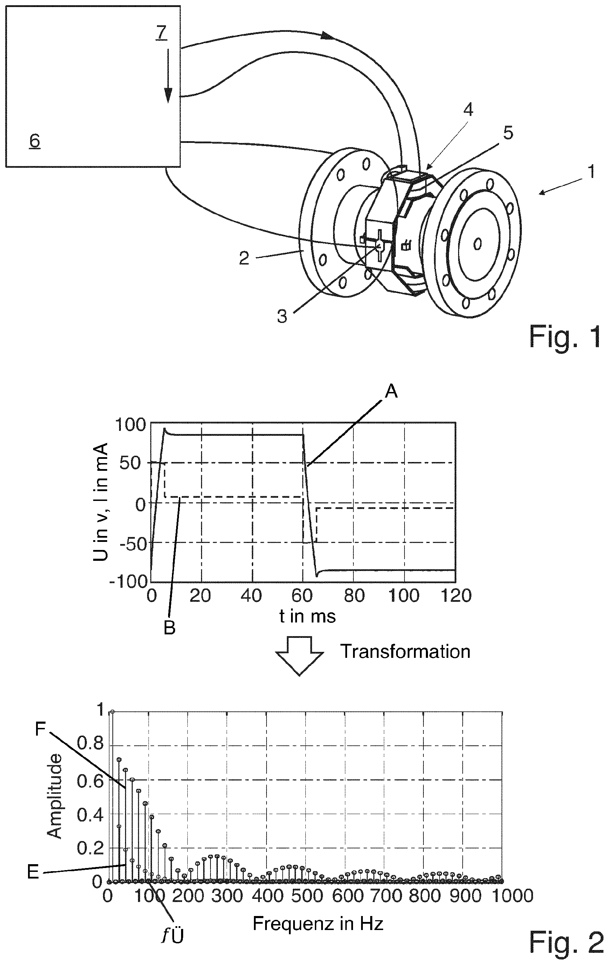

Der Aufbau und das Messprinzip des magnetisch-induktiven Durchflussmessgerätes 1 ist grundsätzlich bekannt (siehe Fig. 1). Durch ein Messrohr 2 wird ein Medium geleitet, das eine elektrische Leitfähigkeit aufweist. Das Messrohr 2 umfasst üblicherweise ein metallisches Rohr mit einem elektrisch isolierenden Liner oder ein Kunststoff- bzw. Keramikrohr. Eine magnetfelderzeugende Vorrichtung 4 ist so angebracht, dass sich die Magnetfeldlinien im Wesentlichen senkrecht zu einer durch die Messrohrachse definierten Längsrichtung orientieren. Als magnetfelderzeugende Vorrichtung 4 eignet sich vorzugsweise eine Sattelspule oder ein Polschuh mit aufgesetzter Spule 5. Bei angelegtem Magnetfeld entsteht im Messrohr 2 eine Potentialverteilung im fließenden Medium, die mit an der Innenwand des Messrohres 2 gegenüberliegend angebrachten Messelektroden 3 abgegriffen wird. In der Regel werden zwei Messelektroden 3 verwendet, welche diametral angeordnet sind und eine Elektrodenachse bilden, die senkrecht zu einer Symmetrieachse der Magnetfeldlinien und der Längsachse des Messrohres 2 verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Ist die Dichte des Mediums bekannt, so kann der Massedurchfluss bestimmt werden.

Das mittels der Spulen- und Polschuhanordnung aufgebaute Magnetfeld wird durch einen getakteten Gleichstrom wechselnder Strömungsrichtung erzeugt. Eine Betriebsschaltung 6 ist mit den beiden Spulen 5 verbunden und dazu eingerichtet, ein Anregungssignal mit einem charakteristischen Verlauf an das Spulensystem anzulegen, mit welchem der Spulenstrom oder die Spulenspannung reguliert wird.

Vorteilhafte Ausgestaltungen des charakteristischer Verlaufes der Anregungssignale B werden in den Fig. 1 und Fig. 2 abgebildet. Das Umpolen der Spulenspannung gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Eine Mess- und/oder Auswerteschaltung 7 liest die an den Messelektroden 3 anliegende Spannung aus und gibt die Durchflussgeschwindigkeit und/oder den errechneten Volumendurchfluss und/oder den Massedurchfluss des Mediums aus. Bei dem in Fig. 1 dargestellten Querschnitt eines magnetisch-induktiven Durchflussmessgerät 1 befinden sich die Messelektroden 3 in direktem Kontakt mit dem Medium. Die Kopplung kann jedoch auch kapazitiv erfolgen. Erfindungsgemäß ist die Mess- und/oder Auswerteschaltung 7 zusätzlich dazu eingerichtet, ein Messsignal A an dem Spulensystem zu bestimmen. Das Messsignal A umfasst die an dem Spulensystem tatsächlich anliegende Spulenspannung un/oder den Spulenstrom durch das Spulensystem.

Erfindungsgemäß ist die Mess- und/oder Auswerteschaltung weiterhin dazu eingerichtet das Anregungssignal B und das Messsignal A oder eine von dem Anregungssignal B und Messsignal A abhängige Größe in ein Frequenzspektrum zu transformieren, und daraus eine Abweichung *σ* des Blindwiderstandes von einem Sollwert zu bestimmen und den ermittelten Durchflussmesswert in Abhängigkeit der bestimmten Abweichung *σ* zu korrigieren.

Eine nicht abgebildete Anzeigeeinheit gibt die ermittelte Abweichung *σ* oder eine von der ermittelten Abweichung *σ* abhängigen Größe aus. Alternativ kann eine Meldung oder ein Warnhinweis ausgegeben werden, wenn diese vom hinterlegten Vorgabewert oder Vorgabeintervall abweichen. Der Vorgabewert wird mittels eines mathematischen Modells, Kalibrationsverfahrens und/oder Simulationsprogrammes ermittelt. Dies ist jedoch insbesondere bei Anwendungen im Trinkwasserbereich nicht ausreichend. Daher ist die Mess- und/oder Auswerteschaltung 7 dazu eingerichtet die gemessenen Messspannung oder eine von der Messspannung abhängige Durchflussmessgröße um die ermittelten Abweichung *σ* zu korrigieren. Dabei wird die Abweichung *σ* nicht zwingend über das gesamte Frequenzspektrum bzw. für alle einzelnen Frequenzen bestimmt, sondern für eine ausgewählte Überwachungsfrequenz *f*_{Ü}.

Die Fig. 2 zeigt eine Ausgestaltung eines Anregungssignales B und eines Messsignales A im Zeitbereich, und die sich daraus ergebenden Frequenzspektren E und F im Frequenzbereich. Gemäß der Ausgestaltung umfasst das Anregungssignal B eine Spulenspannung und das Messsignal A einen Spulenstrom. Die Spulenspannung umfasst zwei getaktete Pulse mit unterschiedlichen Pulsamplituden und Pulsbreiten. Ein derartiges Anregungssignal B entspricht einem typischen Spulenerregersignal D.

Nach der Transformation eines zeitlichen Ausschnittes des Messsignales und des Anregungssignales erhält man jeweils ein Frequenzspektrum mit diskreten Frequenzen. Aus dem frequenzabhängigen Blindwiderstand lassen sich dann bei Abweichungen von einem Sollwert auf Einflüsse durch externe Magnetfelder zurückschließen. Die Mess- und/oder Auswerteeinheit ist dazu eingerichtet, die Änderung des Blindwiderstandes für eine eingestellte Überwachungsfrequenz *f*_{Ü} zu überwachen. Gemäß der abgebildeten Ausgestaltung liegt die Überwachungsfrequenz bei ca. 100 *Hz.*

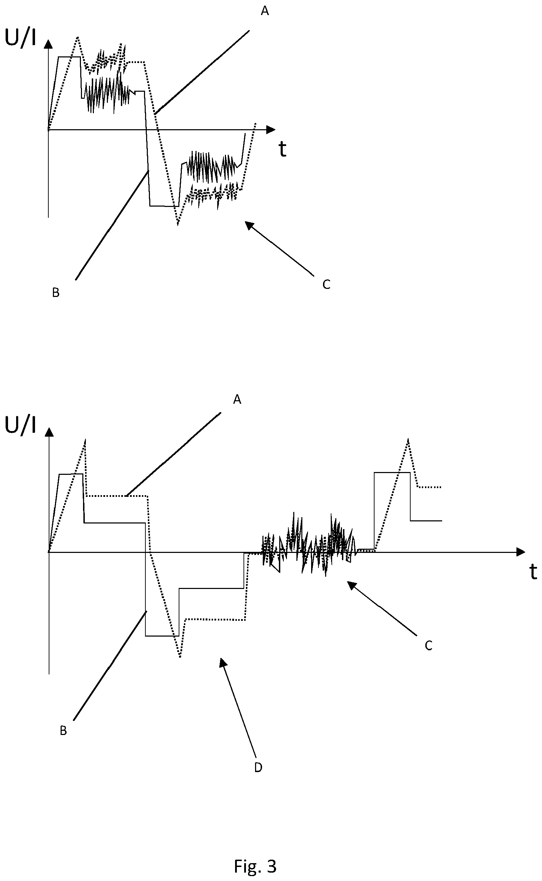

In der Fig. 3 sind zwei Ausgestaltungen des Anregungssignales B und des Messsignales A abgebildet. In beiden Ausgestaltungen umfasst das Anregungssignal B eine Spulenspannung und das Messsignal A einen Spulenstrom. Beide Ausgestaltungen unterscheiden sich von der Ausgestaltung der Fig. 1 darin, dass zusätzlich zum Spulenerregersignal D ein Diagnosesignal C auf das Spulensystem aufgebracht wird. Die beiden abgebildeten Ausgestaltungen unterscheiden sich darin, wie sich das Diagnosesignal C zum Spulenerregersignal D verhält.

Die erste der beiden Ausgestaltungen zeigt ein charakteristisches Anregungssignal B, bei dem das Diagnosesignal C zusätzlich zum Spulenerregersignal D angelegt wird. Das Anregungssignal B ist eine Superposition des Spulenerregersignales D und des Diagnosesignales C. D.h. Spulenerregersignal D und Diagnosesignal C überlagern sich. Das Messsignal A hängt von dem Anregungssignal B ab und weist daher eine Reaktion des Spulensystems auf das Diagnosesignal C auf. Das Diagnosesignal C ist so zeitlich mit dem Spulenerregersignal D abzugleichen, dass sich das Diagnosesignal C nicht in die Messphase hineinerstreckt. Die Reaktion des Messsignales A auf das Anregungssignal B ist empfindlich gegenüber externer Magnetfelder. Daher wird die Frequenz und/oder die Amplitude des Diagnosesignales C unabhängig vom Spulenerregersignal D so festgelegt, dass externe Einflüsse mit der Mess- und/oder Auswerteschaltung aufgelöst werden können.

Die zweite der beiden Ausgestaltungen zeigt auch ein charakteristisches Anregungssignal B, bei dem das Diagnosesignal C zusätzlich zum Spulenerregersignal D angelegt wird. Jedoch wird das Spulenerregersignal D für einen Zeitraum ausgesetzt, in dem das Diagnosesignal C aufgebracht wird. Diagnosesignal C und Spulenerregersignal D wechseln sich somit ab.

### Bezugszeichenliste

- 1: magnetisch-induktives Durchflussmessgerät
- 2: Messrohr
- 3: Messelektrode
- 4: magnetfelderzeugende Vorrichtung
- 5: Spule
- 6: Betriebsschaltung
- 7: Mess- und/oder Auswerteschaltung

- A: Messsignal
- B: Anregungssignal
- C: Diagnosesignal
- D: Spulenerregersignal
- E: Frequenzspektrum des Messsignales
- F: Frequenzspektrum des Anregungssignales

- *f*_{Ü}: Überwachungsfrequenz

## Patentansprüche

1. Verfahren zum Betreiben eines magnetisch-induktiven Durchflussmessgerätes (1), wobei das magnetisch-induktive Durchflussmessgerät (1) umfasst:
- ein Messrohr (2) zum Führen eines fließfähigen Mediums;
- mindestens zwei Messelektroden (3) zum Erfassen einer strömungsgeschwindigkeitsabhängigen, in dem Medium induzierten Messspannung; und
- eine magnetfelderzeugende Vorrichtung (4) zur Erzeugung eines das Messrohr (2) durchsetzenden Magnetfeldes,
wobei die magnetfelderzeugende Vorrichtung (4) ein Spulensystem mit mindestens einer Spule (5) aufweist;
**dadurch gekennzeichnet, dass**
eine Abweichung *σ* eines Blindwiderstandes des Spulensystems oder einer vom Blindwiderstand des Spulensystems abhängigen Größe von einem Sollwert bestimmt wird,
wobei ein Messsignal (A) an dem Spulensystem ermittelt wird,
wobei mittels einer Transformation eines zeitlichen Ausschnittes des Anregungssignales (B) und des Messignales oder eines zeitlichen Ausschnittes einer von dem Anregungssignal (B) und/oder Messsignal (A) abhängigen Größe eine Bestimmung der vom Blindwiderstand des Spulensystems abhängigen Größe zumindest für eine Überwachungsfrequenz *f*_{Ü} erfolgt.

2. Verfahren nach Anspruch 1,
wobei ein korrigierter Durchflussmesswert *Q_{V}* mittels einer Polynomfunktion, insbesondere einer linearen Funktion in Abhängigkeit der Abweichung *σ* und der aktuell erfassten Messspannung oder einer von der erfassten Messspannung abhängigen Größe ermittelt wird,
wobei die Polynomfunktion optional einen Korrekturfaktor *k* aufweist.

3. Verfahren nach einem der Ansprüche 1 und/oder 2,
wobei ein Anregungssignal (B) am Spulensystem bereitgestellt wird,
wobei das Anregungssignal (B) eine Pulsfolge mit einer Frequenz, mindestens zwei Pulsfolgen mit jeweils mindestens einer Frequenz und/oder mindestens ein sinusförmiges Signal umfasst.

4. Verfahren nach einem der vorherigen Ansprüche,
wobei die Transformation eine Integraltransformation und/oder eine Fourier-Analyse ist.

5. Verfahren nach einem der Ansprüche 4,
wobei für die Überwachungsfrequenz *f*_{Ü} gilt, dass
0,1 *Hz* ≤ *f*_{Ü} ≤ 10 *kHz,* insbesondere 1 ≤ *f*_{Ü} ≤ 1.000 *Hz* und bevorzugt *f*_{Ü} ≤ 250 *Hz* ist.

6. Verfahren nach einem der vorherigen Ansprüche,
wobei der Sollwert des Blindwiderstandes oder der vom Blindwiderstand des Blindsystems abhängigen Größe, den Blindwiderstand oder die vom Blindwiderstand des Spulensystems abhängige Größe im justierten Zustand beschreibt.

7. Verfahren nach einem der vorherigen Ansprüche,
wobei die vom Blindwiderstand des Spulensystems abhängige Größe den Scheinwiderstand des Spulensystems umfasst.

8. Verfahren nach Anspruch 3,
wobei das Anregungssignal (B) einem Spulenerregersignal (D) entspricht,
wobei das Spulenerregersignal (D) zumindest eine Messphase aufweist, in der ein Spulenstrom im Wesentlichen konstant ist und in der eine Messung der induzierten Messspannung erfolgt,
wobei das Spulenerregersignal (D) zwischen zwei insbesondere aufeinanderfolgende Messphasen eine Einschwingphase aufweist, in welcher sich ein Spulenstrom und/oder eine Spulenstromrichtung im Spulensystem ändert.

9. Verfahren nach Anspruch 3,
wobei das Anregungssignal (B) einem Spulenerregersignal (D) und einem zusätzlich aufgeprägten Diagnosesignal (C) entspricht,
wobei das Spulenerregersignal (D) zumindest eine Messphase aufweist, in der ein Spulenstrom im Wesentlichen konstant ist und in der eine Messung der induzierten Messspannung erfolgt,
wobei das Spulenerregersignal (D) und das Diagnosesignal (C) jeweils eine Pulsfolge mit einer Frequenz, mindestens zwei Pulsfolgen mit jeweils mindestens einer Frequenz und/oder mindestens ein sinusförmiges Signal umfasst,
wobei eine Amplitude des Diagnosesignales (C) von einer Amplitude des Spulenerregersignales (D) abweicht.

10. Magnetisch-induktives Durchflussmessgerät (1), umfassend:
- ein Messrohr (2) zum Führen eines fließfähigen Mediums;
- mindestens zwei Messelektroden (3) zum Erfassen einer strömungsgeschwindigkeitsabhängigen, in dem Medium induzierten Messspannung; und
- eine magnetfelderzeugende Vorrichtung (4) zur Erzeugung eines das Messrohr (1) durchsetzenden Magnetfeldes,
wobei die magnetfelderzeugende Vorrichtung (4) ein Spulensystem mit mindestens einer Spule (5) aufweist;
**dadurch gekennzeichnet,**
**dass** eine Betriebs-, Mess- und/oder Auswerteschaltung (6, 7) dazu eingerichtet ist, das Verfahren nach mindestens einem der vorhergehenden Ansprüche auszuführen.

## Claims

1. A method for operating a magneto-inductive flowmeter (1), wherein the magneto-inductive flowmeter (1) comprises:
- A measuring tube (2) for guiding a fluid medium;
- At least two measuring electrodes (3) for registering a flow-velocity-dependent measuring voltage induced in the medium; and
- a magnetic-field-generating apparatus (4) for generating a magnetic field which passes through the measuring tube (2),
wherein the magnetic-field-generating apparatus (4) has a coil system with at least one coil (5); **characterized in that**
a deviation *σ* of a reactance of the coil system or of a variable dependent on the reactance of the coil system from a target value is determined,
wherein a measurement signal (A) is determined at the coil system,
wherein the variable dependent on the reactance of the coil system is determined at least for a monitoring frequency *f*_{ü} by means of a transform of a temporal extract of the excitation signal (B) and the measurement signal, or a temporal extract of a variable dependent on the excitation signal (B) and/or the measurement signal (A).

2. The method as claimed in claim 1,
wherein a corrected measured flow value *Qᵥ* is determined by means of a polynomial function, in particular a linear function depending on the deviation *σ* and the currently registered measuring voltage, or a variable dependent on the registered measuring voltage,
wherein the polynomial function optionally has a correction factor *k*.

3. The method as claimed in one of claims 1 and/or 2,
wherein an excitation signal (B) is provided at the coil system,
wherein the excitation signal (B) comprises a pulse sequence with a frequency, at least two pulse sequences each with at least one frequency and/or at least one sinusoidal signal.

4. The method as claimed in one of the preceding claims,
wherein the transform is an integral transform and/or a Fourier analysis.

5. The method as claimed in claim 4,
wherein the following applies to the monitoring frequency *f*_{ü}: 0.1 *Hz* ≤ *f*_{ü} ≤ 10 *kHz,* in particular 1 ≤ *f*_{ü} ≤ 1000 *Hz,* and preferably *f*_{ü} ≤ 250 *Hz.*

6. The method as claimed in one of the preceding claims,
wherein the target value for the reactance or for the variable dependent on the reactance of the reactive system describes the reactance or the variable dependent on the reactance of the coil system in the adjusted state.

7. The method as claimed in one of the preceding claims,
wherein the variable dependent on the reactance of the coil system comprises the impedance of the coil system.

8. The method as claimed in claim 3,
wherein the excitation signal (B) corresponds to a coil excitation signal (D),
wherein the coil excitation signal (D) has at least one measuring phase in which a coil current is mostly constant and in which the induced measuring voltage is measured,
wherein the coil excitation signal (D) between two measuring phases, in particular consecutive ones, has a transient oscillation phase in which a coil current and/or a coil current direction in the coil system changes.

9. The method as claimed in claim 3,
wherein the excitation signal (B) corresponds to a coil excitation signal (D) and an additionally superimposed diagnostic signal (C), wherein the coil excitation signal (D) has at least one measuring phase in which a coil current is mostly constant and in which the induced measuring voltage is measured,
wherein the coil excitation signal (D) and the diagnostic signal (C) each comprise a pulse sequence with a frequency, at least two pulse sequences each with at least one frequency and/or at least one sinusoidal signal,
wherein an amplitude of the diagnostic signal (C) differs from an amplitude of the coil excitation signal (D).

10. A magneto-inductive flowmeter (1), comprising:
- A measuring tube (2) for guiding a fluid medium;
- At least two measuring electrodes (3) for registering a flow-velocity-dependent measuring voltage induced in the medium; and
- a magnetic-field-generating apparatus (4) for generating a magnetic field which passes through the measuring tube (1),
wherein the magnetic-field-generating apparatus (4) has a coil system with at least one coil (5); **characterized in that**
an operating, measuring and/or evaluation circuit (6, 7) is configured to perform the method as claimed in at least one of the preceding claims.

## Revendications

1. Procédé destiné à l'exploitation d'un débitmètre électromagnétique (1), lequel débitmètre électromagnétique comprend :
- un tube de mesure (2) destiné à guider un produit fluide ;
- au moins deux électrodes de mesure (3) destinées à mesurer une tension de mesure induite dans le produit en fonction de la vitesse d'écoulement ; et
- un dispositif de génération de champ magnétique (4) destiné à générer un champ magnétique traversant le tube de mesure (2),
le dispositif de génération de champ magnétique (4) présentant un système de bobines avec au moins une bobine (5) ;
**caractérisé**
**en ce qu'**est déterminé un écart d'une réactance du système de bobines ou d'une grandeur dépendant de la réactance du système de bobines par rapport à une valeur de consigne,
un signal de mesure (A) étant déterminé sur le système de bobines,
une détermination de la grandeur dépendant de la réactance du système de bobines étant effectuée au moins pour une fréquence de surveillance *f_{Ü}* au moyen d'une transformation d'une section temporelle du signal d'excitation (B) et du signal de mesure ou d'une section temporelle d'une grandeur dépendant du signal d'excitation (B) et/ou du signal de mesure (A).

2. Procédé selon la revendication 1,
pour lequel une valeur mesurée de débit corrigée Qv est déterminée au moyen d'une fonction polynomiale, notamment d'une fonction linéaire, en fonction de l'écart σ et de la tension de mesure actuellement détectée ou d'une grandeur dépendant de la tension de mesure détectée,
la fonction polynomiale présentant en option un facteur de correction *k*.

3. Procédé selon l'une des revendications 1 et/ou 2,
pour lequel un signal d'excitation (B) est fourni au système de bobines,
le signal d'excitation (B) comprenant un train d'impulsions avec une fréquence, au moins deux trains d'impulsions avec chacun au moins une fréquence et/ou au moins un signal sinusoïdal.

4. Procédé selon l'une des revendications précédentes,
pour lequel la transformation est une transformation intégrale et/ou une analyse de Fourier.

5. Procédé selon la revendication 4,
pour lequel la fréquence de surveillance *f*_{Ü} est telle que *0,1 Hz* ≤ *f_{Ü}* ≤ *10 kHz,* notamment 1 ≤ *f_{Ü}* ≤ *1 000 Hz* et de préférence *f_{Ü}* ≤ *250 Hz.*

6. Procédé selon l'une des revendications précédentes,
pour lequel la valeur de consigne de la réactance ou de la grandeur dépendant de la réactance du système de bobine décrit la réactance ou la grandeur dépendant de la réactance du système de bobine à l'état ajusté.

7. Procédé selon l'une des revendications précédentes,
pour lequel la grandeur dépendant de la réactance du système de bobines comprend la résistance apparente du système de bobines

8. Procédé selon la revendication 3,
pour lequel le signal d'excitation (B) correspond à un signal d'excitation de bobine (D),
le signal d'excitation de bobine (D) présentant au moins une phase de mesure dans laquelle un courant de bobine est pour l'essentiel constant et dans laquelle une mesure de la tension de mesure induite est effectuée,
le signal d'excitation de bobine (D) présentant, entre deux phases de mesure notamment successives, une phase transitoire dans laquelle un courant de bobine et/ou une direction de courant de bobine varie(nt) dans le système de bobines.

9. Procédé selon la revendication 3,
pour lequel le signal d'excitation (B) correspond à un signal d'excitation de bobine (D) et à un signal de diagnostic (C) appliqué en supplément,
le signal d'excitation de bobine (D) présentant au moins une phase de mesure dans laquelle un courant de bobine est pour l'essentiel constant et dans laquelle une mesure de la tension de mesure induite est effectuée,
le signal d'excitation de bobine (D) et le signal de diagnostic (C) comprenant respectivement un train d'impulsions avec une fréquence, au moins deux trains d'impulsions avec respectivement au moins une fréquence et/ou au moins un signal sinusoïdal,
une amplitude du signal de diagnostic (C) étant différente d'une amplitude du signal d'excitation de bobine (D).

10. Débitmètre électromagnétique (1), lequel comprend :
- un tube de mesure (2) destiné à guider un produit fluide ;
- au moins deux électrodes de mesure (3) destinées à mesurer une tension de mesure dépendant de la vitesse d'écoulement et induite dans le produit ; et
- un dispositif de génération de champ magnétique (4) destiné à générer un champ magnétique traversant le tube de mesure (1),
le dispositif de génération de champ magnétique (4) comportant un système de bobines comprenant au moins une bobine (5) ;
**caractérisé**
**en ce qu'**un circuit d'exploitation, de mesure et/ou d'évaluation (6, 7) est conçu pour mettre en oeuvre le procédé selon au moins l'une des revendications précédentes.
